# EUROPEAN PATENT APPLICATION

(11) **EP 1 980 719 A2**
(43) Date of publication of application: **15.10.2008**
(21) Application number: 08251244.3
(22) Date of filing: 31.03.2008
(51) Int. Cl.: F01D 17/06, F01D 17/04, G01L 1/00, G01P 3/00

(54) **Turbomachine with microwave sensor**

(30) Priority: 11.04.2007 US 733874
(71) Applicant: Hamilton Sundstrand Corporation, Windsor Locks, CT 06096-1010 (US)
(72) Inventor: Holmquist, Eric B., South Windsor, Connecticut 06074 (US)
(74) Representative: Tomlinson, Kerry John

(57) **Abstract**

A turbo machine (10) includes a spool (12). A microwave detection system (24) is configured to detect a spool parameter associated with the spool (12). A controller (40) is in communication with the microwave position sensing system (24) and is programmed to determine a spool condition, such as shaft torque and/or shear in response to the spool parameter.

## Description

### BACKGROUND

This application relates to sensing parameters relating to a component, such as a spool, within a turbo machine. This application also relates to a microwave position sensing system configured for use with the turbo machine.

Various position sensing systems exist, such as variable displacement transducers and Hall-effect proximity probes. However, the systems are not suitable in many instances for turbo machines due to the limited accuracy and the hostile environment within which they must perform. Microwave frequency signals have been used to detect the clearance of a turbine blade tip within a turbo machine. A microwave generator produces a signal that is reflected by the passing turbine blade tip and processed to detect the position of the turbine relative to the turbine's outer housing.

It is desirable to detect various parameters associated with a turbo machine. For example, it is desirable to detect whether a rotor shaft of a spool becomes sheared. The turbine section supported by the rotor shaft becomes unloaded during a shear condition and can accelerate quickly to a potentially dangerous over-speed condition. Current rotor shaft shear detection methods depend on sensing the acceleration rate of the turbine section via a dedicated, mechanically coupled sensor, which requires additional structure and cost. It is also desirable to detect rotor shaft torque between the turbine section and the compressor section to assess engine performance and bearing health. Detecting rotor shaft torque has also required dedicated, mechanically coupled sensors, which is undesired.

What is needed is a reliable and cost effective system of detecting rotor shaft torque and shear.

### SUMMARY

A turbo machine includes a spool having a shaft supporting a compressor section and a turbine section, in one example. A microwave position sensing system is configured to detect a spool parameter, such as a position of a passing vane and/or blade of a corresponding compressor and turbine. A controller is in communication with the microwave position sensing system and is programmed to determine a spool condition in response to the spool parameter. For example, the spool condition includes shaft torque and/or shear. The example microwave position sensing system can also be used for detecting the tip clearance of a blade and/or vane so that a common sensor can be used to detect multiple parameters relating to the operation of the turbo machine.

Certain preferred embodiments will now be described by way of example only and with reference to the accompanying drawings..

### BRIEF DESCRIPTION OF THE DRAWINGS

Figure 1 is a schematic view of a turbo machine including an example microwave position sensing system.
Figure 2 is a schematic view of another example turbo machine and microwave position sensing system.

### DETAILED DESCRIPTION OF THE PREFERRED EMBODIMENT

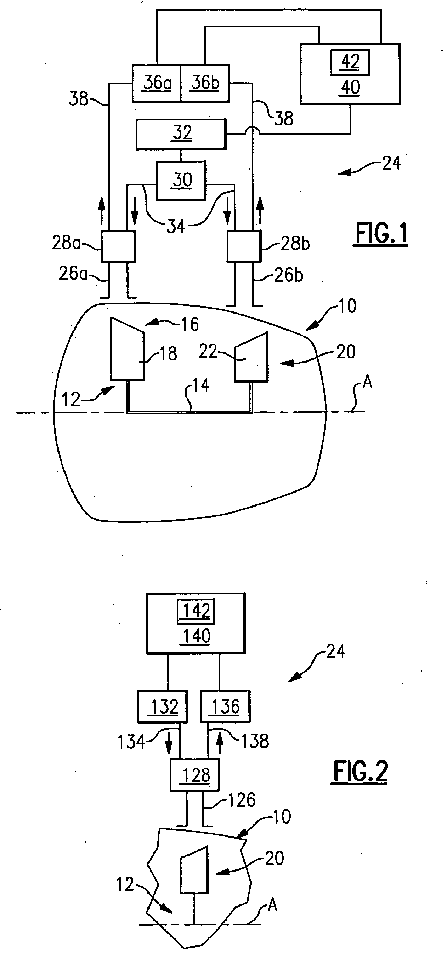

Figure 1 is a highly schematic view of a turbo machine 10. The turbo machine 10 includes at least one spool 12 rotatable about an axis A. The spool 12 includes a shaft 14 supporting a compressor section 16 and a turbine section 20. The compressor 16 includes multiple circumferentially arranged vanes 18, and the turbine 20 includes multiple circumferentially arranged blades 22, as is known in the art.

It is desirable to monitor various spool parameters associated with the.spool 12 to measure engine performance and bearing health, for example. For example, it is desirable to monitor shaft torque to ascertain whether shaft or bearing maintenance is desired. In another example, it is desirable to detect if the shaft 14 has sheared so that steps can be taken to avoid a turbine over-speed condition, which could further damage the turbo machine 10.

A microwave position sensing system 24 is configured to detect at least one spool parameter relating to the spool 12. In one example, the system 12 detects tip clearance between the compressor and/or turbine sections and the turbo machine's outer case. In the example, the system 24 is used to detect torque and/or shear of the shaft 14. The vanes 18 and/or blades 22 are the target components of which the system 24 detects their position.

Referring to Figure 1, the system 24 includes probes 26a, 26b respectively associated with the compressor and turbine sections 16, 20. In one example, a microwave source 32 provides microwaves to a splitter 30 that splits and sends microwave frequencies to the probes 26a, 26b. The microwave frequencies are carried from the splitter 30 through input cables 34 that provide the microwave frequencies to couplers 28a, 28b respectively associated with the probes 26a, 26b. The couplers 28a, 28b separate the exitation signal from the reflected signal for each probe in the examples.

The probes 26a, 26b direct the microwave frequency at the desired target component, such as the compressor vanes and turbine blades, in one example. The frequencies are selected based upon the target component size and the space available in the turbo machine structure. The probes 26a, 26b also receive the reflected microwave frequency from the target component and direct them back through the couplers 28a, 28b. In one example, output cables 38 connected to the couplers 28a, 28b provide the reflected microwave frequencies, which relate to a corresponding spool parameter, to a corresponding microwave detector 36a, 36b. In the example, separate microwave detectors 36a, 36b are shown; however, a single microwave detector can be used to interpret the reflected microwave frequencies. The microwave detectors 36a, 36b sense the energy level of the reflected signals and communicate with a controller 40, which interprets the reflected microwave frequencies signals and determines a spool condition in response to the spool parameters received.

In one example, the controller 40 includes hardware and/or software to track the number of times the blade and vane tips pass the probe and determines the energy level of the reflected microwave signal. However, it should be understood that these features may also be provided by the microwave detectors 36a, 36b and that the microwave detectors 36a, 36b can be integrated with the controller 40 or any of its features provided in separate structures. In one example, the controller 40 includes memory 42 having information to which the spool condition can be compared. The controller 40 compares the detected spool condition to the information in the memory 42 relating to a limit spool condition.

In one example, the probes 26a, 26b provide information relating to the rotational position of the passing blade and vane tips. The controller 40 then determines the relative position of the passing tips to determine torque in the shaft 14 or a shaft shear condition. In one example, a tooth and time algorithm can be used to simultaneously monitor the RPM of both the compressor 16 and turbine 20. The ratio between the compressor RPM and turbine RPM is determined. When the actual ratio drops below a desired ratio, which corresponds to the limit spool condition, it is an indication that the turbine 20 is rotating faster than the compressor 16 and a shaft shear has occurred. The controller 40 can command various turbo machine components to avoid further damage in response to the shaft shear. For example, the controller 40 can command a valve to shut off fuel flow to a combustor to reduce the speed of the turbine 20. In another example, the controller 40 can determine the difference between the compressor RPM and the turbine RPM. When the difference exceeds a predetermined amount, which is stored in the memory 42 as a limit spool condition, a shaft shear has occurred.

To measure shaft torque, known techniques used to measure torque on a spinning shaft with a geared or toothed wheel on either end of the shaft can be used. Such techniques measure shifts in arrival time of the toothed wheel, in this case the compressor vanes and turbine blades.

In another example shown in Figure 2, a single probe 126 can be used to determine shaft shear. In one example, the probe 126 monitors a turbine section 20. The probe 126 communicates with a coupler 128 and a microwave source 132 and microwave detector 136 similar to the arrangement described in Figure 1. A controller 140 communicates with the microwave source 132 and microwave detector 136 to determine a shaft shear. For example, the probe 126 may detect an acceleration in the passing tips, which may be indicative of a shaft shear when the controller 140 compares the acceleration information relative to information stored in a memory 142. The configuration provided in Figure 2 to detect turbine acceleration can be provided as a redundancy to the arrangement in Figure 1 while using the same components. In that case, the controller 140 would contain the components and logic necessary to determine acceleration in addition to RPM ratio and/or RPM difference.

Although example embodiments have been disclosed, a worker of ordinary skill in this art would recognize that certain modifications would come within the scope of the claims. For that reason, the following claims should be studied to determine their true scope and content.

## Claims

1. A turbo machine (10) comprising:
a spool (12);
a microwave position sensing system (24) configured to detect a spool parameter including a rotational parameter; and
a controller (40) in communication with the microwave position sensing system (24) and programmed to determine a spool condition in response to the spool parameter.

2. The turbo machine according to claim 1, wherein the rotational parameter is shaft torque.

3. The turbo machine according to claim 1, wherein the rotational parameter is shaft shear.

4. The turbo machine according to claim 1, 2 or 3, wherein the spool includes a turbine (20) supported on a shaft (14), the spool parameter being associated with the turbine (20).

5. The turbo machine according to claim 4, wherein the turbine (20) includes blades (22) having tips, the spool parameter relating to a position of the tips.

6. The turbo machine according to claim 4 or 5, wherein the spool (12) includes a compressor (16) supported on the shaft (14), the spool parameter including a position of the compressor (16).

7. The turbo machine according to claim 6, wherein the spool condition includes a relative position between the turbine (20) and the compressor (16).

8. The turbo machine according to claim 6 or 7, wherein the spool condition includes a speed ratio of the turbine (20) and the compressor (16).

9. The turbo machine according to claim 7, wherein the spool condition is a torque of the shaft (14).

10. The turbo machine according to claim 7, wherein the spool condition is a difference in speeds of the turbine and compressor.

11. The turbo machine according to any of claims 4 to 6, wherein the spool condition is an acceleration of the turbine (20).

12. The turbo machine according to any preceding claim, wherein the controller (40) is programmed to compare the spool condition to a limit spool condition to identify an undesired turbo machine condition.

13. The turbo machine according to claim 12, wherein the limit spool condition is indicative of a sheared shaft.

14. The turbo machine according to claim 13, wherein the controller (40) is programmed to cut fuel flow to a combustor in response to the sheared shaft.

15. The turbo machine according to claim 12, wherein the limit spool condition is indicative of a bearing maintenance condition.

16. The turbo machine according to claim 12, wherein the limit spool condition is indicative of a shaft maintenance condition.
